# EUROPEAN PATENT APPLICATION

(11) **EP 0 573 683 A1**
(43) Date of publication of application: **15.12.1993**
(21) Application number: 92109667.3
(22) Date of filing: 09.06.1992
(51) Int. Cl.: B29C 47/06, B29C 47/04

(54) **Method for the manufacture of blow-molded reinforced thermoplastic containers, and containers produced by said method**

(71) Applicant: Rubie, Jean, Mansart Waterloo (BE)
(72) Inventor: Rubie, Jean, Mansart Waterloo (BE)
(74) Representative: Porsia, Attilio, Dr.

(57) **Abstract**

Method for the manufacture of a blow-molded reinforced thermoplastic material container (1) characterized by the steps of: extruding a continuous plastic tubular body made from at least a first comparatively weak thermoplastic material (2); coextruding into said tubular body a plurality of spaced parallel reinforcing stripes (4) made from a second comparatively strong thermoplastic material embedded within the body of said first thermoplastic material and extending axially along the lenght of said tubular body; feeding one lenght of said extruded reinforced striped continuous tubular body (28) to the mold of a blow-molding machine (29), and forming a blow molded reinforced striped container.

## Description

This invention relates generally to a method for the manufacture of blow-molded reinforced thermoplastic containers, and to the containers produced by said method.

From US-A-3.394.433 a co-extrusion apparatus is known for forming a plastic tube of a first thermoplastic material with a ribbed mesh formed from a second thermoplastic material on the outer surface of the tube. The said outer ribbed mesh may be fiber reinforced and of different color.

The presence of said external outwardly projecting reinforcing ribs is very objectionable should said tubes be subjected to a blow-molding process in order to produce bottle-like containers.

From US-A-3.097.058 a process for extruding thermoplastic resins into tubes and blow molding said tubes into containers is known, according to which said tubes and by consequence the containers molded from said tubes are provided on their external surface with decorative stripes.

From US-A-2.138.378 a process is known for the manufacture of rubber products in the form of continuous tubing and/or stripes, according to which stripes of coloured rubber material are placed upon the surface of a continuous tube or strip of rubber material extruded from a forming machine.

None of the above prior art processes is concerned with the manufacture of blow-molded containers having embedded a reinforcing structure of a different thermoplastic material.

It is therefore the main object of the invention to provide a method for the manufacture of plastic containers comprising a multi-stripe structure of thermoplastic or reinforcing material embedded within the thermoplastic body of these plastic containers so as to obtain an increased structural strength and resistance including but not limited to top load resistance, distention resistance and resistance to chocs.

Furthermore, in order to contain the costs of manufacture of plastic material containers and in order to solve the ecological problem of the recycling of the waste of thermoplastic material, it has been suggested to produce said containers by a blow molding process, starting from a plastic material tube made from at least three co-extruded layers, namely an intermediate layer made from recycled material enclosed between an external layer and an internal layer made from virgin thermoplastic material. In order to assure that the the intermediate layer be bonded to the internal and external layers, it is necessary that the recycled material be exhibiting compatible chemical-physical characteristics of the virgin material of the surrounding layers of the containers.

This method permits to obtain an economy of virgin material equivalent to the quantity of recycled material used which could be as high as 50 to 60%, depending on the shape and coànformation of the container, of the whole amount of thermoplastic material requested for the production of the containers. However, its use is confined to the use of a recycled thermoplastic material which is compatible with the thermoplastic material of the surrounding layers.

The use of recycled material may bring as a result a diminution of mechanical/physical resistance characteristics of the plastic container for equal weight as virgin material.

To reduce the cost of plastic containers and at the same time reduce the amount of packaging material introduced in the coaste stream it would be of considerable advantage to be able to reduce the total weight of plastic containers without loosing any of its physical barrier or resistance characteristics.

It is therefore a further object of the invention to maintain the container strength and to safeguard the barrier properties of the container, with respect to a possible contamination of the product introduced in the container itself, whenever sub-quality regrind material (recycled thermoplastic material) is utilized in the structure.

According to a main feature of the invention the above and other objects of the invention are obtained by a method for the manufacture of a blow-molded reinforced container characterized by the steps of: extruding a continuous plastic tubular body made from at least a first comparatively weak thermoplastic resin; coextruding into said tubular body a plurality of spaced parallel reinforcing stripes made from a second comparatively strong thermoplastic resin embedded within the body of said first thermoplastic resin and extending axially along the length of said tubular body; feeding one length of said extruded reinforced striped continuous tubular body to the mold of a blow-molding machine, and forming a blow molded reinforced striped container.

According to a further feature of the invention, the said stripes may be made from a thermoplastic material which is not compatible with the body in which they are embedded and by which they are completely surrounded, so that said stripes are not joined or integrally bonded to the body which confines them in place.

By this technique it is possible to form containers which by exhibiting the same strength or top load capability as the known prior art containers, present a weigth which is lower than the weigth of said prior art containers.

It is also a further object of the invention to provide a blow-molded container comprising at least one body of a first comparatively weak thermoplastic resin embedding a plurality of spaced parallel stripes made from a second comparatively strong thermoplastic resin.

According to a further aspect of the invention, the said body may be advantageously made from at least two layers of the same or of compatible thermoplastic resins, embedding the said spaced parallel stripes of, advantageously, a recycled thermoplastic resin material, which may be formed from a thermoplastic resin compatible or not compatible with the said surrounding thermoplastic resin layers in which said stripes are embedded.

Further objects and advantages of the present invention will become apparent from the following description of some preferred embodiments, made with reference to the accompanying drawings, in which
Figure 1 is a perspective view of a container according to the invention.
Figure 2 is a cross sectional view of the container of Figure 1, taken along the plane of line II-II of Figure 1.
Figure 3 is a diagrammatical longitudinal sectional view of a three layer extrusion head for the co-extrusion of a stripe reinforced thermoplastic tube for the manufacture of the blow molded containers according to the invention.
Figure 4 is a detail in enlarged scale in longitudinal section of the stripe ring of the extrusion head of Figure 3.
Figure 5 is a cross sectional view taken along the plane of line V-V of Figure 4, of the stripe ring of Figure 4, and
Figure 6 is a diagrammatical, partially sectioned view of a blow-molding mold for the manufacture of the containers according to the invention.

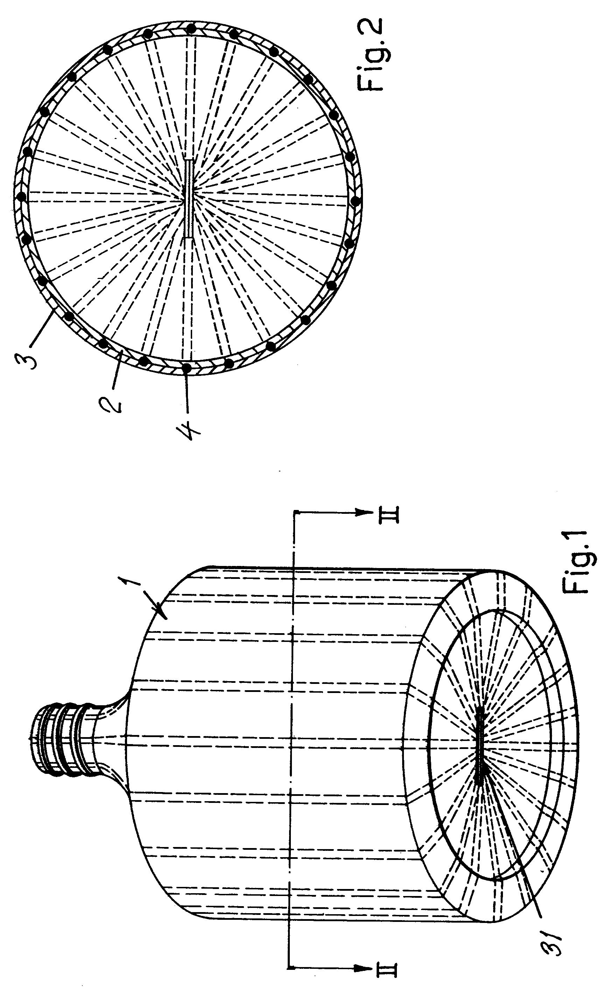

With reference to Figure 1, reference numeral 1 denotes generally a rigid or semirigid blow molded bottle container according to the invention. In the example shown, the container comprises a cylindrical body provided with a flat bottom at one end, and provided at the other end with a screw threaded neck. Of course, the container shown is given only by way of illustrative example of a container which can be manufactured, and its shape, dimensions and proportions are not forming a part of the present invention, which is not in any way limited to cylindrical containers nor to containers provided with a screw threaded neck.

As best shown in Figure 2, the container of Figure 1 basically comprises two layers, namely one inner layer 2 and one outer layer 3, and a buried layer formed by a plurality of substantially parallel stripes 4 extending along the generating lines of the cylindrical body of the container 1, and converging toward the axis of the container in correspondence of the bottom and of the neck portion of the container, as best shown in Figure 1.

Although in Figure 2 the said stripes are shown as having a circular cross sectional shape, same may advantageously be formed with a non-circular cross sectional shape, and for example with a polygonal cross sectional shape (square, triangular, hexagonal or the like) or with an elliptical cross sectional shape, or with any other desired suitable cross sectional shape.

Further, although the body of the container has been shown as formed from a three layer tube, comprising inner and outer layers 2 and 3 and a buried striped layer 4, it will be evident that it may be formed from a single material or a multi layer tube, and for instace a five layers tube, so as to comprise, for instance, in addition to the three layers shown in Figure 2, a fourth, external colored layer, and a fifth, internal, barrier layer made from a suitable thermoplastic resin having barrier properties, and for instance a layer of a thermoplastic resin suitable for edible products, or the like.

Moreover, although in Figure 2 the container is shown as formed by a three-layers tube, it will be evident that it is possible to make it from a two layers tube, by co-extruding the stripes 4 inside of the mass of a tube being extruded.

Advantageously, the outer and inner layers are made from similar materials or the same material, i.e. a comparatively weaker thermoplastic resin with possible addition of color to the outer layer, while the buried layer 4 is made from a stronger thermoplastic resin.

A good example would be a container made of high density copolimer polyethylene in which would be embedded reinforcing stripes of high molecular weight or semi high molecular weight polyethylene.

Advantageously, the material of the buried striped layer 4 may be a recycled thermoplastic resin material.

Thanks to the presence of the stronger reinforcing stripes 4, the result will be an increased vertical load capability in the case of the virgin stripe materials and a maintained top load capability in the case of the use of recycled material for the stripes 4 of the container 1.

This means that, at parity of vertical load capability and/or top load capability, it is possible to decrease the total amount of material forming the container by a significant value.

Since the reinforcing stripes are completely buried between the layers 2 and 3, they do not come into contact with the product contained in the container.

Of course the number and the reciprocal distance of the stripes 4 shown in Figures 1 and 2 is given only for illustration purposes, and the said parameters may be varied at will, according to the requirements.

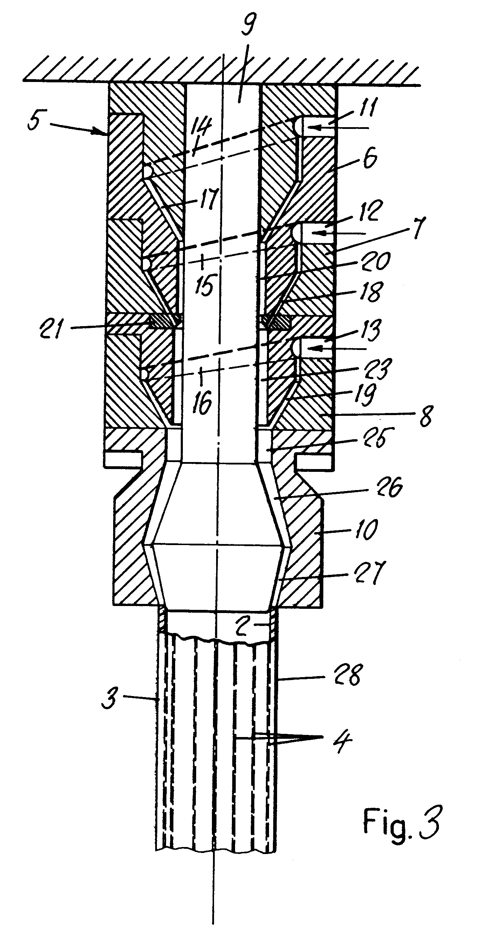

With reference to Figure 3, an extrusion head suitable for the production of a tube for the subsequent blow molding of the container of Figure 1 will be described.

The extrusion head 5 comprises, in the example shown, three annular extrusion units 6, 7, 8, arranged in cascade around the cylindrical portion 9 of a central core member extending up to the die head 10, as will be better described later.

Each extrusion unit 6,7,8 is connected, through the inlet spouts 11, 12, 13 to a conventional type extruder (not shown) for extruding thermoplastic resins. The spouts 11, 12 and 13 are in turn connected to a manifold annulus 14, 15, 16 which is continuous with tapered die annulus 17, 18, 19. Die annulus 17 communicates with a first annular extrusion chamber 20, in which the outermost layer of the composite extrusion tubing is formed.

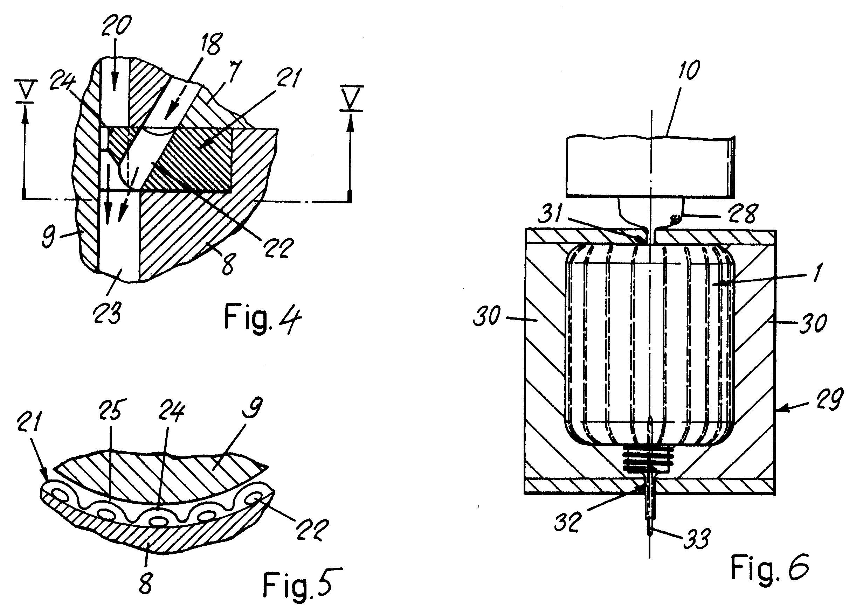

Die annulus 18 communicates with the stripe ring 21. As best shown in Figures 4 and 5, the stripe ring 21 is provided with a crown of stripe-extrusion holes 22 communicating at one side with die annulus 18, and at the other side with the second annular extrusion chamber 23. The said ring 21 is further provided with a scalloped collar 24 protruding radially inwardly into annular chamber 20 up to a certain distance from the core 9, so as to provide a number of flow passages 25 surrounding the stripes-extrusion holes 22.

The third die annulus 19, communicates in turn with the third extrusion chamber 25. As it is apparent from Figure 3, the width of the annular gaps defining chambers 20, 23 and 25 are stepwise increasing from chamber 20 to chamber 25, so as to accomodate the different layers forming the final multi layer tube. Chamber 25 communicates in turn with the die head 10. The die head 10 is provided with a first outwardly flaring, gradually restricted annular passage 26, communicating in turn with the inwardly tapering annular die passage 27 from which the finished thermoplastic tube 28 is extruded. The said tube, in the example shown, is composed by an outer layer 3, an inner layer 2, and a central layer formed by a plurality of stripes 4.

Of course, although the head 5 has been shown and described as provided with three extrusion units 6, 7 and 8, it will be evident that same may be provided with a plurality and for instance with five of said units, so as to provide, in addition to the extruded layers described, an innermost layer formed for instance from a thermoplastic material exhibiting suitable barrier features, and with an outermost colored layer, so as to produce a five layer tube with embedded stripes.

In Figure 6 a blow molding mold is shown, for blow molding into a suitable container 1 the tube 28 extruded from head 5.

A conventional method of blow molding utilizes a mold 29 comprising two identical halves 30 which pinch off the tube 28 at 31 and 32. The pinch-off at 31 is complete to seal the tube length at the bottom while that at 32 leaves a small orifice which permits injection through injection nozzle 33, connected to a suitable source (not shown) of compressed gas, of air or other blowing gas into the tube length to force the walls thereof quickly and uniformly outwardly against the die shape to form bottle 1, for example.

The operation of the described device will be evident.

The molten thermoplastic resin from the extruders (not shown) is fed to the inlet spouts 11, 12 and 13 of the extrusion head 5. The thermoplastic resin fed to spout 11 is transformed by die annulus 17 into a first tubular layer 2 which is fed through chamber 20, and past extrusion ring 21. In correspondence of ring 21, the stripes 4 are extruded through extrusion holes 22 and the tubular layer 3 with the crown of stripes 4 applied against its surface is moved through chamber 23 up to die annulus 19, in correspondence of which it is wrapped by the third, external tubular layer 3. The composite three-layer tubular sandwich is thereafter passed through die head 10, from which it is extruded in form of a continous three-layer tube 28.

Thereafter, as shown in Figure 6, one length of the tube 28 is fed to the blow-molding die 29, in which it is shaped into the container 1.

Of course, the extrusion head described is given by way of non limiting example, and other extrusion apparatuses can be used to produce the multi-layer tube according to the invention, and for instance a device can be used like the one described in US-A-3.394.433, in order to have the stripes arranged according to an helical pattern inside of the composite tube.

## Claims

1. Method for the manufacture of a blow-molded reinforced thermoplastic material container characterized by the steps of: extruding a continuous plastic tubular body made from at least a first comparatively weak thermoplastic material; coextruding into said tubular body a plurality of spaced parallel reinforcing stripes made from a second comparatively strong thermoplastic material embedded within the body of said first thermoplastic material and extending axially along the length of said tubular body; feeding one length of said extruded reinforced striped continuous tubular body to the mold of a blow-molding machine, and forming a blow molded reinforced striped container.

2. Method according to claim 1, in which said stripes are formed from a recycled thermoplastic material.

3. Method according to claims 1 and 2, in which the said stripes are made from a thermoplastic material which is not compatible with the thermoplastic material of the body in which they are embedded and by which they are completely surrounded, so that said stripes are not joined or integrally bonded to the thermoplastic material of the body which confines them in place.

4. Method according to the preceding claims in which said body is formed by at least two concentric tubular layers of said first thermoplastic material, between which a layer of stripes of said second thermoplastic material is enclosed.

5. Method according to the preceding claims, in which said stripes extend parallel to the generating lines of said tubular layers.

6. Method according to claims 1 to 4, in which said stripes extend following a helical line pattern between said tubular layers.

7. Method according to the preceding claims in which said stripes are made from a high density, high strength thermoplastic material.

8. Method according to claim 7, in which said stripes are made from a recycled thermoplastic material.

9. A blow molded container made according to the method of claims 1 to 8, characterized by the fact that it comprises at least one body of a first comparatively weak thermoplastic resin embedding a layer formed by a plurality of spaced parallel stripes made from a second comparatively strong thermoplastic resin.

10. A blow-molded container according to claim 9 characterized by the fact that the said embedded layer of reinforcing stripes of strong thermoplastic material extends along the generating lines of the container.

11. A container according to claim 9, characterized by the fact it is formed by at least one inner and one outer tubular layer made from compatible thermoplastic materials, and one intermediate striped layer of high strength thermoplastic material buried between said inner and outer layers.

12. A container according to claims 9 to 11, in which said intermediante layer is formed from recycled thermoplastic material.

13. A container according to claim 12, in which said recycled thermoplastic material is made from a thermoplastic resin which is not compatible with the surrounding thermoplastic resin layers.

14. A device for the manufacture of a container according to claims 9 to 13 by the method according to claims 1 to 8, comprising a plurality of extruders; a coextrusion head provided with a plurality of annular extrusion chambers each connected to one of the said extruders; and a blow-forming mold disposed downstream of said coextrusion head.

15. A device according to claim 14, in which at least one of the said extrusion chambers is provided with means for extruding a layer of stripes of thermoplastic material.
